# EUROPEAN PATENT APPLICATION

(11) **EP 4 790 683 A1**
(43) Date of publication of application: **12.08.2026**
(21) Application number: 25217819.9
(22) Date of filing: 21.11.2025
(51) Int. Cl.: G08G 5/22, G08G 5/23, G08G 5/30, G08G 5/53, G08G 5/56, G08G 5/57, G08G 5/76

(54) **ALERTING SYSTEM FOR HIGHLY AUTOMATED M:N AERIAL VEHICLE OPERATIONS**

(30) Priority: 06.02.2025 US 202519046992
(71) Applicant: The Boeing Company, Arlington, VA 22202 (US)
(72) Inventor: VIDAL FRANCO, José Ignacio, Arlington, 22202 (US); TANG, Hualong, Arlington, 22202 (US); PIERINI, Davide, Arlington, 22202 (US); SHIKERMAN, Mark, Arlington, 22202 (US)
(74) Representative: Boult Wade Tennant LLP

(57) **Abstract**

Techniques for operating a plurality of autonomous aerial vehicles are presented. The techniques may include: receiving, by a computer, a plurality of trigger event indications, where the trigger event indications represent a plurality of trigger events concerning the autonomous aerial vehicles, where a respective trigger event indication is associated with a respective task; retrieving, from an electronic database, for each trigger event indication, respective priority data, from which priority data for the trigger event indications is obtained, where respective priority data for a respective trigger event indication includes respective task time data and respective severity data; ranking, by the computer, and in real time, a plurality of tasks associated with the trigger event indications, from which a ranked task list is obtained, where the ranking is based on at least the priority data for the trigger event indications; and providing the ranked task list.

## Description

### Field

This disclosure relates generally to autonomous and semi-autonomous aircraft.

### Background

Multi-vehicle operations capability, also referred to as m:N operations, is an essential component to autonomous operations at scale for advanced air mobility. From a human-factors perspective, highly automated m:N operations present distinct challenges regarding operations, safety, etc. Mainly, but not exclusively, the operator must maintain situational awareness of N relatively independent operational situations, which may evolve simultaneously. The operator may also have to respond at the same time to multiple events that might not represent the chronological sequence of events of a single mission. In some instances, the operator may be required to respond to multiple events at the same time, which increases the risks of operations hazards, such as accidents. Further, prior art attempts that sequentially order required operator actions according to severity are insufficient and can result in missed tasks.

### Summary

There is provided a method of operating a plurality of autonomous aerial vehicles is presented. The method includes: receiving, by a computer, a plurality of trigger event indications, wherein the plurality of trigger event indications represent a plurality of trigger events concerning the plurality of autonomous aerial vehicles, wherein a respective trigger event indication is associated with a respective task; retrieving, from an electronic database, for each trigger event indication, respective priority data, from which priority data for the plurality of trigger event indications is obtained, wherein respective priority data for a respective trigger event indication comprises respective task time data and respective severity data; ranking, by the computer, and in real time, a plurality of tasks associated with the plurality of trigger event indications, from which a ranked task list is obtained, wherein the ranking is based on at least the priority data for the plurality of trigger event indications; and providing the ranked task list.

Various optional features of the above method include the following. The ranked task list may rank at least one less severe task ahead of at least one more severe task. The providing may include displaying the ranked task list. The ranking may be further based on respective operational context data. Respective operational context data for at least one trigger event indication may include at least one of: amount of fuel, altitude, shortest path to a landing zone, and weather data. The ranking may be further based on operator behavioral data. The ranking may be further based on task intensity data. The respective task time data for a respective trigger event indication may include respective time on task data. The method may include determining, based on a respective time on task data, and for a respective trigger event indication, a respective time of consequences. The plurality of tasks may include nominal tasks and off-nominal tasks.

There is provided a system for operating a plurality of autonomous aerial vehicles is presented. The system includes: a non-transitory computer readable medium comprising instructions; and at least one electronic processor that executes the instructions to perform operations comprising: receiving, by the processor, a plurality of trigger event indications, wherein the plurality of trigger event indications represent a plurality of trigger events concerning the plurality of autonomous aerial vehicles, wherein a respective trigger event indication is associated with a respective task; retrieving, from an electronic database, for each trigger event indication, respective priority data, from which priority data for the plurality of trigger event indications is obtained, wherein respective priority data for a respective trigger event indication comprises respective task time data and respective severity data; ranking, by the processor, and in real time, a plurality of tasks associated with the plurality of trigger event indications, from which a ranked task list is obtained, wherein the ranking is based on at least the priority data for the plurality of trigger event indications; and providing the ranked task list.

Various optional features of the above system include the following. The ranked task list may rank at least one less severe task ahead of at least one more severe task. The providing may include displaying the ranked task list. The ranking may be further based on respective operational context data. Respective operational context data for at least one trigger event indication may include at least one of: amount of fuel, altitude, shortest path to a landing zone, and weather data. The ranking may be further based on operator behavioral data. The ranking may be further based on task intensity data. The respective task time data for a respective trigger event indication may include respective time on task data. The operations may further comprise determining, based on a respective time on task data, and for a respective trigger event indication, a respective time of consequences. The plurality of tasks may include nominal tasks and off-nominal tasks.

Combinations, (including multiple dependent combinations) of the above-described elements and those within the specification have been contemplated by the inventors and may be made, except where otherwise indicated or where contradictory.

### Brief Description of the Drawings

Various features of the examples can be more fully appreciated, as the same become better understood with reference to the following detailed description of the examples when considered in connection with the accompanying figures, in which:
Fig. 1 is a graph illustrating unpredictable workload shift in the context of operating a plurality of autonomous aerial vehicles;
Fig. 2 is a timeline diagram illustrating a problem with the prior art technique of ranking tasks according to severity;
Fig. 3 is a timeline diagram illustrating various complexities that can arise when operating a plurality of autonomous aerial vehicles;
Fig. 4 is a schematic diagram of a system for operating a plurality of autonomous aerial vehicles;
Fig. 5 is a flow diagram for a method of operating a plurality of autonomous aerial vehicles.

### Description of the Examples

Reference will now be made in detail to examples, illustrated in the accompanying drawings. Wherever convenient, the same reference numbers will be used throughout the drawings to refer to the same or like parts. In the following description, reference is made to the accompanying drawings that form a part thereof. It is to be understood that other examples may be utilized and that changes may be made without departing from the scope of the claims. The following description is, therefore, merely exemplary.

Some examples intelligently prioritize tasks for an operator of multiple autonomous aerial vehicles, also referred to as a multi-vehicle supervisor, thereby significantly reducing operational hazard while improving operational efficiency. Some examples provide an ordering of tasks that the multi-vehicle supervisor must address to ensure a safe and efficient workflow. Some examples provide a reordering of tasks each time a new task arises. Some examples provide alerts to the multi-vehicle supervisor.

Some examples provide a system that simultaneously evaluates, weights, and prioritizes the characteristic feature(s) of event(s) of autonomous vehicles in real time, thereby reducing operational hazard for a human operator. Various examples may implement a variety of techniques that prioritize tasks linked to autonomous aerial vehicles, ranging from prioritization of at least one task, to a complex prioritization that utilizes optimizing weights assigned to characteristic features.

Examples may include any of a variety of features. For instance, some examples effectively warn multi-vehicle supervisors about non-nominal situations. Some examples effectively prioritize both alerts and nominal tasks based on their expected time-related characteristics (e.g., Time on Task, Remaining Acceptable Delay, Time to Consequences), severities, and operational contexts. Some examples give multi-vehicle supervisors guidance as to which alert and task have to be addressed, and in which order subsequent actions should be done. Some examples mitigate the risks derived from the constant goal-switching that multi-vehicle supervisors are expected to face.

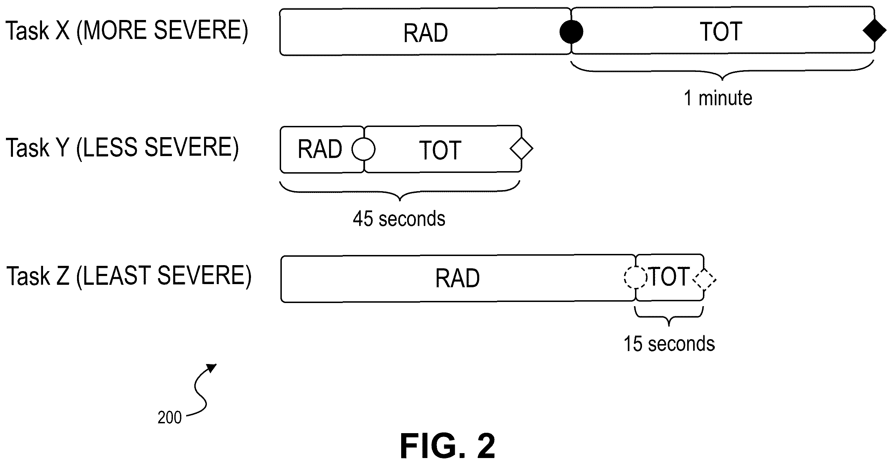

Some examples solve certain problems with prior art systems that rank required tasks according to severity, as illustrated and described herein in reference to Fig. 2. Such prior art systems can fail to achieve all required tasks, leading to failed operational and/or safety goals. Some examples solve this prior art problem by automatically detecting trigger events and ranking tasks in real time based on priority data that not only includes severity data, but also task time data (e.g., time on task data, remaining acceptable delay data, and/or time of consequences data) and/or operational context data (e.g., amount of fuel, altitude, shortest path to a landing zone, and/or weather data). Thus, some examples can non-intuitively rank a less severe task ahead of a relatively more severe task, which in some instances can lead to completion of all tasks, in contradistinction to prior art techniques that rank tasks solely according to severity.

These and other features and advantages are shown and described presently in reference to the accompanying figures.

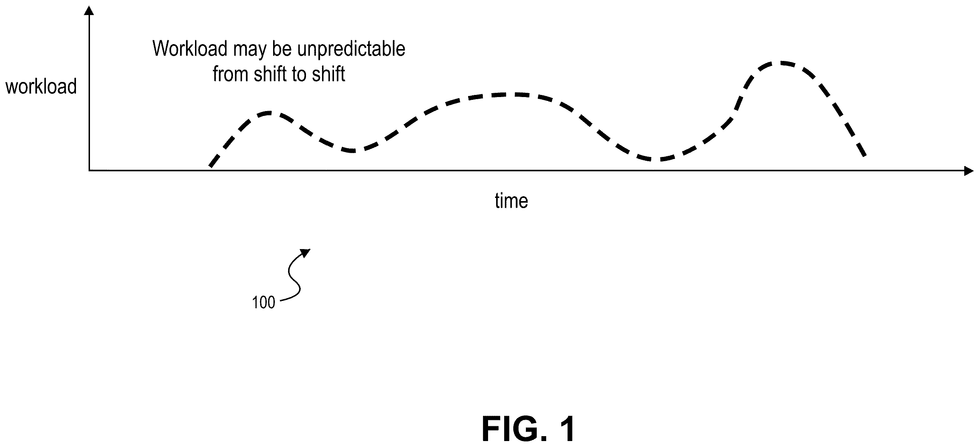

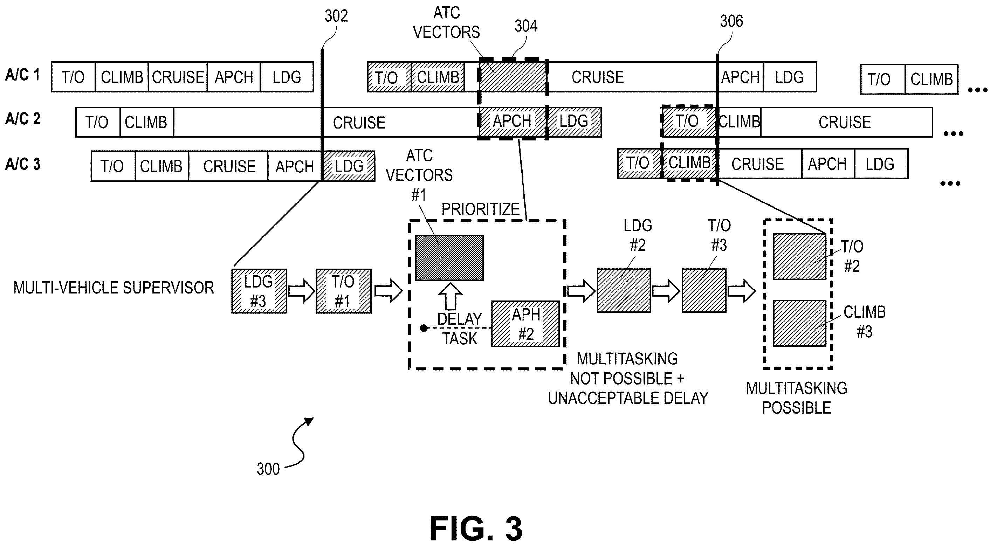

Fig. 1 is a graph 100 illustrating unpredictable workload shift in the context of operating a plurality of autonomous aerial vehicles, according to various examples. In Fig. 1, the x-axis represents time and the y-axis represents workload. The workload may be conceptualized in terms of the number of tasks a multi-vehicle operator must address, for example. In general, the workload may result from the interplay of the cognitive functions required to perform the task, the need for multitasking, and the ratio between the required and available time to perform a task, possibly together with individual characteristics. As is apparent from Fig. 1, a multi-vehicle operator's workload can increase and decrease unexpectedly. Moreover, at times of increased workload, the multi-vehicle operator may be required to judge which of multiple tasks to address in which order, which can lead to problems as shown and described presently in reference to Figs. 2 and 3, for example.

Fig. 2 is a timeline diagram 200 illustrating a problem with the prior art technique of ranking tasks according to severity. The diagram 200 depicts time progressing to the right and represents timelines for completion of three tasks, denoted "Task X," "Task Y," and "Task Z." Note that the principle illustrated here in reference to three tasks for simplicity is generalizable to any number of tasks, each one with their own time, severity, and intensity characteristics. The tasks may be associated with the same aircraft or, more typically, three different aircraft.

The required completion times for Task X, Task Y, and Task Z are represented by black diamonds, white diamonds, and dotted-line diamonds, respectively. These times may be referred to as the Time of Consequences ("TOC") for each task. If the TOT is reached without completion of the task, a consequence of a certain severity may occur. Each task has an associated Time On Task ("TOT"), which represents the temporal duration required to complete the task. Thus, to meet the required completion times for Task X and Task Y, the tasks must be initiated by the times indicated by the black circles, white circles, and dotted-line circles, respectively, which represent the respective TOT interval before respective TOC is reached. The time intervals from the present time to the start times of the tasks required to meet the TOC are referred to as the Remaining Acceptable Delay ("RAD"). That is, a RAD represents the time up until further delay for initiating the task will result in its completion after the TOC. Note that the TOC is a static place in time, whereas the RAD decreases as time moves forward.

In general, tasks may be associated with a severity designation. By way of non-limiting example, a task may have a severity of catastrophic, major, or minor, representing the magnitude of the consequence incurred if it is not completed by the TOC. As shown in Fig. 2, Task X has an associated severity that is greater than the severity associated with Task Y, and Task Y has an associated severity that is greater than Task Z. For example, Task X may have an associated severity of "catastrophic," Task Y may have an associated severity of "major," and Task Z may have an associated severity of "minor."

Prior art techniques may rank outstanding tasks solely, or primarily, based on severity. However, doing so for the tasks illustrated in Fig. 2 would mean performing Task X, then Task Y, then Task Z. However, this would result in an unfavorable result, namely, both Task Y and Task Z not being completed in time. Specifically, the TOT for Task X is shown as 1 minute, whereas the total of the RAD and TOT for Task Y is shown as 45 seconds, and the TOT for Task Z is shown as 15 seconds. If a multi-vehicle supervisor undertakes Task X prior to Task Y and Task Z, as some prior art systems would direct, then Task Y will not be initiated until after its associated RAD has expired. Further, Task Z would not be initiated until its associated RAD has expired. Consequently, neither Task Y nor Task Z would be completed on time, which could result in consequences of varying severity, e.g., major and/or minor.

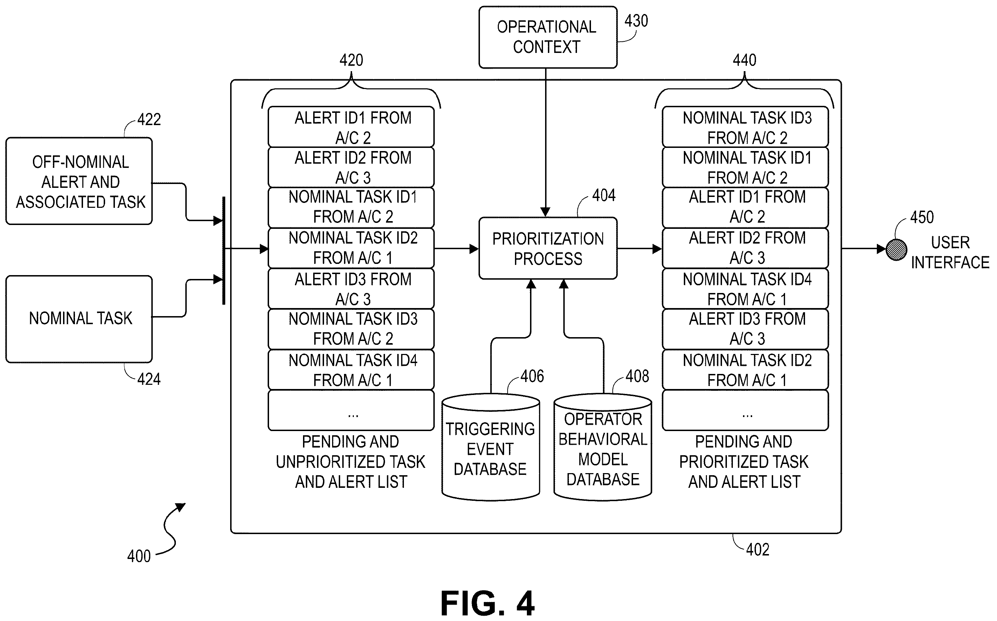

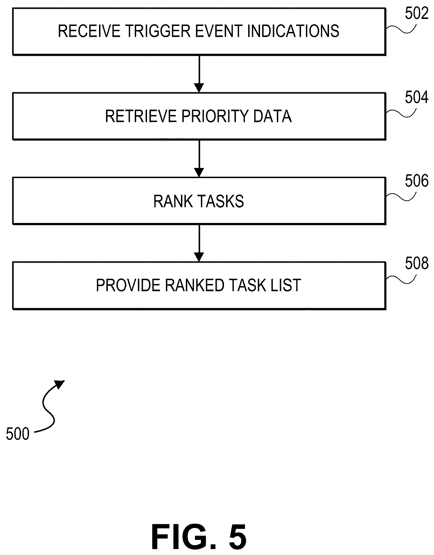

Moreover, humans tend to rank tasks for completion according to decreasing severity. A ranking that includes a lower severity task ahead of a higher severity task is unintuitive and unlikely to be conceived of by a human. Nevertheless, some examples may generate ranked task lists that include less severe tasks ahead of more severe tasks. In doing so, examples may take into account for task data that includes not only task severity, but also task time data, e.g., TOT, TOC, and/or RAD. For the tasks of Fig. 2, some examples may rank the tasks as: Task Y, then Task Z, then Task X, as this guarantees that all tasks are timely addressed. Some examples may rank the tasks as: Task Z, then Task Y, then Task X, which also meets the time requirements, but puts a less severe Task Z before a task with higher severity (Task Y). Further examples of non-intuitive rankings according to various examples are shown and described herein, e.g., in reference to Figs. 4 and 5.

Fig. 3 is a timeline diagram 300 illustrating various complexities that can arise when operating a plurality of autonomous aerial vehicles, according to various examples. The diagram 300 illustrates various scenarios for which a multi-vehicle supervisor may or may not need to address multiple tasks simultaneously. In particular, Fig. 3 illustrates multiple aircraft timelines (A/C 1, A/C 2, and A/C 3) as well as a multi-vehicle supervisor timeline. Each aircraft is shown with non-limiting example associated trigger events, such as taking off, climbing, cruising, approaching, landing, and air traffic control providing vectors. In the following description, the associated tasks and their required amounts of multi-vehicle supervisor attention are illustrative rather than limiting. In general, various examples may or may not have nominal or off-nominal tasks associated with various trigger events. Further, in general, individual tasks may require any of a variety of degrees of attention. Yet further, various tasks may be subject to full or partial automation, which may fully or partially relieve an operator from task completion responsibilities. Thus, the tasks and associated degrees of required attention described in reference to Fig. 3 are for non-limiting example illustrative purposes only.

As a first example scenario, at time 302 in the diagram 300, A/C 1 is on the ground and has no associated task. Also at time 302, A/C 2 is cruising, which has an associated nominal task, which may be achieved by automation or require only minimal resources for the multi-vehicle supervisor to perform. Further at time 302, A/C 3 is landing, which has an associated task for the multi-vehicle supervisor to perform. Shortly after time 302, A/C 1 will take off, which has an associated nominal task, which may be achieved by automation or require only minimal resources for the multi-vehicle supervisor to perform. Consequently, for the first scenario, the multi-vehicle supervisor may multitask and/or attend to all required tasks in sequence.

As a second example scenario, at time 306 in the diagram 300, A/C 1 is cruising, A/C 2 is taking off, and A/C 3 is climbing. By way of non-limiting example, taking off and climbing may be associated with tasks that are either fully automated or require only nominal, *de minimis*, multi-vehicle supervisor attention. Accordingly, at time 306, the multi-vehicle supervisor may multi-task, that is, may perform a plurality of tasks simultaneously.

As a third example scenario, and in contrast with the times 302 and 306, the multi-vehicle supervisor cannot effectively multi-task at time 304. Namely, at time 304, the multi-vehicle supervisor must attend to a task associated with air traffic control providing a vector for A/C 1 and a task associated with the approach of A/C 2. According to some examples, the task associated with responding to air traffic control's vector provision is cognitively intensive, requiring the multi-vehicle supervisor to take down a series of numbers with accuracy and precision. Further, according to some examples, the task associated with the approach of A/C 2 may require more than *de minimis* cognitive resources. Thus, the multi-vehicle supervisor is required to prioritize between the approach of A/C 2 and the requirements of air traffic control for A/C 1. The commencement of one of these tasks may thus be delayed. However, the RAD for the task that is delayed cannot be passed without incurring the consequence associated with exceeding the TOC. Moreover, as shown and described in reference to Fig. 2, the prioritization process is non-trivial and may not be amenable to simply prioritizing more severe tasks over less severe tasks.

Various examples shown and described herein in reference to Figs. 4 and 5 address and solve the issues presented herein in reference to Figs. 1, 2, and 3.

Fig. 4 is a schematic diagram of a system 400 for operating a plurality of autonomous aerial vehicles, according to various examples. The system may properly address situations such as are shown and described herein in reference to Figs. 1, 2, and/or 3. The system 400 may be utilized by a multi-vehicle supervisor to obtain a ranked list of tasks associated with trigger events from a plurality of autonomous and/or semi-autonomous aircraft. The system 400 may be implemented using a computer 402.

The computer 402 may be communicatively coupled to any, or any combination, of flight operational systems, such as air traffic control, aerial vehicle diagnostics and status systems, and others. The computer 402 may receive from such systems unranked trigger event indications 420, such as nominal task indications 422, and/or off-nominal alert indications 424, the latter of which may be accompanied by associated off-nominal task indications.

The computer 402 may include, or be communicatively coupled to, a triggering event database 406. The triggering event database 406 may include a lookup table associating various trigger event indications with task time data, severity data, and task intensity data. The task time data may include TOT data, by way of non-limiting example. The severity data may be indicative of the magnitude of consequences if the associated task is not completed on time. Each magnitude of consequences may be selected from: catastrophic, major, and minor. The task intensity data may be indicative of the amount of cognitive resources an operator may need to expend in order to complete the task. For example, the task intensity data may be used to determine whether the task may be amenable to multi-tasking, for example.

The computer 402 may include, or be communicatively coupled to, an operator behavioral model database 408. The operator behavioral model database 408 may store data representing operator response times, for example. According to some examples, the operator response times may be individualized for specific multi-vehicle supervisors, based on past measured values and aggregated (e.g., averaged) over time. According to some examples, the operator response times may be generalized over all operators, e.g., according to a statistical distribution. According to some examples, whether individualized or generalized, the operator response times may be time-dependent, e.g., accounting for the different operator response times at different times of day and/or time on shift.

The computer 402 may be communicatively coupled to sources of operational context data 430. Sources may include aircraft flight operational systems, such as air traffic control, aerial vehicle diagnostics and status systems, weather forecast systems, and others. Non-limiting examples of operational context data include amount of fuel for individual aerial vehicles, altitude of individual aerial vehicles, shortest path to a landing zone for individual aerial vehicles, and weather data.

The computer 402 may implement a prioritization process 404. The prioritization process 404 accepts as inputs the trigger event indications 420, and, according to some examples, also the operational context data from the sources of operational context data 430. The prioritization process 404 may re-rank tasks at least whenever a new task arises, because a new task may render a previous task ranking suboptimal. The prioritization process 404 operates to retrieve priority data from the trigger event database corresponding to each of trigger event indications. For each trigger event indication, the priority data may include associated task time data and severity data. The task time data may be TOC data, for example, and the prioritization process 404 may compute a TOC and/or RAD from the TOT data.

The prioritization process 404 may apply any of a variety of techniques. According to some examples, the prioritization process 404 may apply a greedy process or a mixed-integer linear programming process to the task time data, the severity data, and possibly also one or more of: the RAD data, the TOC data, the operational context data, the operator behavioral model data 408, and/or the task intensity data, to sequentially rank the tasks associated with the trigger event indications 420. The prioritization process 404 may attempt to optimize various quantities. For example, the prioritization process 404 may attempt to maximize a probability of all tasks being completed on time. As another example, the prioritization process 404 may attempt to minimize a summation of tardiness across all tasks, where tardiness may be defined as the amount of time elapsed after the alert deadline. As yet another example, the prioritization process 404 may enforce that tardiness is always negative, meaning that all the alerts are addressed in time. The prioritization process 404 may implement any consistent combination of the techniques described herein.

Thus, the prioritization process 404 generates a ranked task list 440. The prioritization process 404 passes the ranked task list 440 to a user interface 450, e.g., a display monitor, where it may be viewed by a multi-vehicle supervisor. The ranked task list 440 may be displayed in full, or a portion (e.g., the top, or top few) tasks may be displayed.

Fig. 5 is a flow diagram for a method 500 of operating a plurality of autonomous aerial vehicles, according to various examples. The method 500 may be implemented using a system 400 such as is shown and described herein in reference to Fig. 4, to address situations such as are shown and described herein in reference to Figs. 1, 2, and/or 3. The method 500 may be utilized by a multi-vehicle supervisor to obtain a ranked list of tasks associated with trigger events from a plurality of autonomous and/or semi-autonomous aircraft.

At 502, the method 500 includes receiving, by a computer, a plurality of trigger event indications. The trigger event indications may represent a plurality of trigger events concerning the plurality of autonomous aerial vehicles. Thus, each trigger event indication is associated with a respective task. Each trigger event may be for a nominal task or an off-nominal alert and associated task, for example.

At 504, the method 500 includes retrieving, from an electronic database, for each trigger event indication, respective priority data. The retrieving thus results in obtaining priority data for the plurality of trigger event indication. Each set of priority data for a given trigger event indication may include respective task time data for the given trigger event indication and respective severity data for the give trigger event indication. The severity data for a given trigger event indication may be one of: catastrophic, major, or minor, by way of non-limiting examples. The task time data for a given trigger event indication may include respective time on task data, and the method 500 may include determining, based on a respective time on task data, and for a respective trigger event indication, a respective time of consequences.

At 506, the method 500 includes ranking, by the computer, a plurality of tasks associated with the plurality of trigger event indications. The ranking of 506 thus produces a ranked task list. The ranking may be based on at least the priority data for the plurality of trigger event indications, and may use a greedy process, or a mixed-integer linear programming process, according to various examples. The ranking may be further based on operator behavioral data. The ranking may be further based on operational context data. The ranking may be further based on task intensity data. The ranking of 506 may be performed whenever a trigger event corresponding to a new task is received. Note that according to the method 500, the ranked task list may rank at least one less severe task ahead of at least one more severe task.

At 508, the method 500 includes providing the ranked task list. For example, the ranked task list may be displayed to a multi-vehicle supervisor.

Further examples are provided in the following clauses.

Clause 1. A system (400) for operating a plurality of autonomous aerial vehicles, the system comprising: a non-transitory computer readable medium comprising instructions; and at least one electronic processor that executes the instructions to perform operations comprising:
receiving (502), by the processor, a plurality of trigger event indications (420), wherein the plurality of trigger event indications represent a plurality of trigger events concerning the plurality of autonomous aerial vehicles, wherein a respective trigger event indication is associated with a respective task;
retrieving (504), from an electronic database (406), for each trigger event indication, respective priority data, from which priority data for the plurality of trigger event indications is obtained, wherein respective priority data for a respective trigger event indication comprises respective task time data and respective severity data;
ranking (506), by the processor, and in real time, a plurality of tasks associated with the plurality of trigger event indications, from which a ranked task list (440) is obtained, wherein the ranking is based on at least the priority data for the plurality of trigger event indications; and
providing (508) the ranked task list.

Clause 2. The system of clause 1, wherein the ranked task list ranks at least one less severe task ahead of at least one more severe task.

Clause 3. The system of clause 1 or 2, wherein the providing comprises displaying the ranked task list.

Clause 4. The system of any of clauses 1 to 3, wherein the ranking is further based on respective operational context data (430).

Clause 5. The system of clause 4, wherein respective operational context data for at least one trigger event indication comprises at least one of: amount of fuel, altitude, shortest path to a landing zone, and weather data.

Clause 6. The system of any of clauses 1 to 5, wherein the ranking is further based on operator behavioral data.

Clause 7. The system of any of clauses 1 to 6, wherein the ranking is further based on task intensity data.

Clause 8. The system of any of clauses 1 to 7, wherein the respective task time data for a respective trigger event indication comprises respective time on task data.

Clause 9. The system of clause 8, wherein the operations further comprise determining, based on a respective time on task data, and for a respective trigger event indication, a respective time of consequences.

Clause 10. The system of any of clauses 1 to 9, wherein the plurality of tasks comprise nominal tasks and off-nominal tasks.

Certain examples can be performed using a computer program or set of programs. The computer programs can exist in a variety of forms both active and inactive. For example, the computer programs can exist as software program(s) comprised of program instructions in source code, object code, executable code or other formats; firmware program(s), or hardware description language (HDL) files. Any of the above can be embodied on a transitory or non-transitory computer readable medium, which include storage devices and signals, in compressed or uncompressed form. Exemplary computer readable storage devices include conventional computer system RAM (random access memory), ROM (read-only memory), EPROM (erasable, programmable ROM), EEPROM (electrically erasable, programmable ROM), flash memory, and magnetic or optical disks or tapes.

Examples of the present disclosure are described herein with reference to flowchart illustrations and/or block diagrams of methods, apparatus (systems), computer programs and computer program products. It will be understood that each block of the flowchart illustrations and/or block diagrams, and combinations of blocks in the flowchart illustrations and/or block diagrams, can be implemented using computer readable program instructions that are executed by an electronic processor.

These computer readable program instructions may be provided to a processor of a general-purpose computer, special purpose computer, or other programmable data processing apparatus to produce a machine, such that the instructions, which execute via the electronic processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

In examples, the computer readable program instructions may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the C programming language or similar programming languages. The computer readable program instructions may execute entirely on a user's computer, partly on the user's computer, as a stand-alone software package, partly on the user's computer and partly on a remote computer or entirely on the remote computer or server.

As used herein, the terms "A or B" and "A and/or B" are intended to encompass A, B, or {A and B}. Further, the terms "A, B, or C" and "A, B, and/or C" are intended to encompass single items, pairs of items, or all items, that is, all of: A, B, C, {A and B}, {A and C}, {B and C}, and {A and B and C}. The term "or" as used herein means "and/or."

As used herein, language such as "at least one of X, Y, and Z," "at least one of X, Y, or Z," "at least one or more of X, Y, and Z," "at least one or more of X, Y, or Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

The techniques presented and claimed herein are referenced and applied to material objects and concrete examples of a practical nature that demonstrably improve the present technical field and, as such, are not abstract, intangible or purely theoretical.

While examples have been described , those skilled in the art will be able to make various modifications without departing from the scope of the claims. The terms and descriptions used herein are set forth by way of illustration only and are not meant as limitations. In particular, although the method has been described by examples, the steps of the method can be performed in a different order than illustrated or simultaneously. Those skilled in the art will recognize that these and other variations are possible within the scope defined by the following claims.

## Claims

1. A method (500) of operating a plurality of autonomous aerial vehicles, the method comprising:
receiving (502), by a computer (402), a plurality of trigger event indications (420), wherein the plurality of trigger event indications represent a plurality of trigger events concerning the plurality of autonomous aerial vehicles, wherein a respective trigger event indication is associated with a respective task;
retrieving (504), from an electronic database (406), for each trigger event indication, respective priority data, from which priority data for the plurality of trigger event indications is obtained, wherein respective priority data for a respective trigger event indication comprises respective task time data and respective severity data;
ranking (506), by the computer, and in real time, a plurality of tasks associated with the plurality of trigger event indications, from which a ranked task list (440) is obtained, wherein the ranking is based on at least the priority data for the plurality of trigger event indications; and
providing (508) the ranked task list.

2. The method of claim 1, wherein the ranked task list ranks at least one less severe task ahead of at least one more severe task.

3. The method of claim 1 or 2, wherein the providing (508) comprises displaying the ranked task list.

4. The method of claim 3, comprising displaying the ranked task list to a multi-vehicle supervisor and the multi-vehicle supervisor selecting tasks from the ranked task list.

5. The method of any preceding claim, comprising performing the plurality of tasks of the ranked task list according to the ranking of the plurality of tasks.

6. The method of any preceding claim, wherein the ranking is further based on respective operational context data (430).

7. The method of claim 6, wherein respective operational context data for at least one trigger event indication comprises at least one of: amount of fuel, altitude, shortest path to a landing zone, and weather data.

8. The method of any preceding claim, wherein the ranking is further based on operator behavioral data.

9. The method of any preceding claim, wherein the ranking is further based on task intensity data.

10. The method of any preceding claim, wherein the respective task time data for a respective trigger event indication comprises respective time on task data.

11. The method of claim 10, further comprising determining, based on a respective time on task data, and for a respective trigger event indication, a respective time of consequences.

12. The method of any preceding claim, wherein the plurality of tasks comprises nominal tasks and off-nominal tasks.

13. A computer program comprising computer program instructions that, when executed by one or more computer processors of a computer (402), cause the computer (402) to perform the method of any preceding claim.

14. A non-transitory computer readable medium having stored therein the computer program of claim 13.

15. A computer (402) for operating a plurality of autonomous aerial vehicles, the computer comprising: one or more computer processors and at least one non-transitory computer readable medium having stored therein the computer program of claim 13.
